# EUROPEAN PATENT APPLICATION

(11) **EP 4 523 864 A1**
(43) Date of publication of application: **19.03.2025**
(21) Application number: 23865714.2
(22) Date of filing: 27.07.2023
(51) Int. Cl.: B25J 9/16, B25J 13/08, G05D 1/20

(54) **MOBILE ROBOT TRAVELING SPECIFIC SPACE AND CONTROL METHOD THEREFOR**

(30) Priority: 15.09.2022 KR 20220116610; 29.09.2022 KR 20220124644
(71) Applicant: Samsung Electronics Co., Ltd., Suwon-si, Gyeonggi-do 16677 (KR)
(72) Inventor: CHOI, Koeun, Suwon-si Gyeonggi-do 16677 (KR); MOON, Boseok, Suwon-si Gyeonggi-do 16677 (KR); YE, Donghee, Suwon-si Gyeonggi-do 16677 (KR)
(74) Representative: Gulde & Partner
(86) International application number: PCT/KR2023/010956
(87) International publication number: WO 2024/058411

(57) **Abstract**

Disclosed is a robot traveling in a specific space. The robot comprising: a memory storing map information, at least one sensor, a driver configured to move the robot in a traveling route to a destination based on the map information, the travelling route comprising a first area, which is a stopover location in the traveling route and a processor configured to: identify a plurality of second areas within the first area, identify priority information corresponding to each of the plurality of second areas, identify a location of one or more objects within the first area based on sensing data acquired through the at least one sensor, update the priority information corresponding to each of the plurality of second areas based on at least one of the identified location of the one or more objects or a predicted departure time to a next stopover location within the traveling route, and control the driver to move the robot based on the updated priority information.

## Description

### [Technical Field]

Embodiments of the disclosure relate to a robot and a method of controlling the robot, and more particularly, to a robot traveling in a specific space based on priorities identified in each of a plurality of subspaces included in the specific space and a method of controlling the same.

### [Background Art]

With the development of electronic technology, various types of electronic devices are being developed and widely used. Recently, technology development for robots that provide services to users and the like has been actively developed. In the case of a robot traveling in a specific space to provide a service to a user, it is possible to promptly provide services to users only when the robot travels in consideration of various types of information on a travel route.

When a robot travels via a specific space, such as an elevator, there is a need for a method in which the robot may provide efficient service by traveling in consideration of traveling information of the robot along with information on objects in the specific space.

### [Disclosure]

### [Technical Solution]

According to an aspect of the disclosure, there is provided a robot including: a memory storing map information; a sensor; a driver configured to move the robot in a traveling route to a destination based on the map information, the travelling route including a first area, which is a stopover location in the traveling route; and a processor configured to: identify a plurality of second areas within the first area, identify priority information corresponding to each of the plurality of second areas, identify a location of one or more objects within the first area based on sensing data acquired through the sensor, update the priority information corresponding to each of the plurality of second areas based on at least one of the identified location of the one or more objects or a predicted departure time to a next stopover location within the traveling route, and control the driver to move the robot based on the updated priority information.

According to an aspect of the disclosure, there is provided a method of controlling a robot, the method including: identifying a plurality of second areas within a first area, which is a stopover location on a traveling route identified based on map information; identifying priority information corresponding to each of the plurality of second areas identifying a location of one or more objects within the first area based on sensing data acquired through a sensor; updating the priority information corresponding to each of the plurality of second areas based on at least one of the identified location of the one or more objects or a predicted departure time to a next stopover location within the traveling route; and controlling a driver to move the robot based on the updated priority information.

According to an aspect of the disclosure, there is provided a non-transitory computer-readable recording medium storing computer instructions that allow a robot to perform an operation when executed by a processor, wherein the operation includes: identifying a plurality of second areas within a first area, which is a stopover location on a traveling route identified based on map information; identifying priority information corresponding to each of the plurality of second areas; identifying a location of one or more objects within the first area based on sensing data acquired through the sensor; updating the priority information corresponding to each of the plurality of second areas based on at least one of the identified location of the one or more objects or a predicted departure time to a next stopover location within the traveling route; and controlling a driver to move the robot based on the updated priority information.

### [Description of Drawings]

The above and/or other aspects of the disclosure will be more apparent by describing certain embodiments of the disclosure with reference to the accompanying drawings, in which:
FIGS. 1A and 1B are diagrams illustrating a method of controlling a robot according to an embodiment;
FIG. 2 is a block diagram illustrating a configuration of a robot according to an embodiment;
FIG. 3A is a flowchart for describing a method of controlling a robot according to an embodiment;
FIG. 3B is a diagram for describing a method of controlling a robot according to an embodiment;
FIGS. 4A and 4B are diagrams for describing a priority of a subspace according to an embodiment;
FIG. 5 is a diagram for describing a relationship between a weight value and a priority according to an embodiment;
FIGS. 6A and 6B are diagrams for describing a method of updating a weight value or a priority according to an embodiment;
FIG. 7A is a flowchart for describing a method of controlling a robot according to an embodiment;
FIGS. 7B and 7C are diagrams for describing a method of driving a robot according to an embodiment;
FIG. 8 is a diagram for describing a method of controlling a robot based on a location of an object according to an embodiment;
FIG. 9 is a diagram for describing the method of controlling a robot based on the number of objects according to an embodiment;
FIG. 10 is a flowchart for describing a method of outputting a notification of a robot according to an embodiment;
FIG. 11A is a flowchart for describing a method of controlling a robot according to an embodiment;
FIGS. 11B and 11C are diagrams for describing the method of controlling a robot based on the number of objects according to an embodiment;
FIG. 12 is a flowchart for describing a method of updating a priority according to an embodiment; and
FIG. 13 is a block diagram illustrating a detailed configuration of a robot according to an embodiment.

### [Mode for Invention]

Hereinafter, the disclosure will be described in detail with reference to the accompanying drawings.

After terms used in the present specification are briefly described, the disclosure will be described in detail.

General terms that are currently widely used were selected as terms used in embodiments of the disclosure in consideration of functions in the disclosure, but may be changed depending on the intention of those skilled in the art or a judicial precedent, the emergence of a new technique, and the like. In addition, in a specific case, terms arbitrarily chosen by an applicant may exist. In this case, the meaning of such terms will be mentioned in detail in a corresponding description portion of the disclosure. Therefore, the terms used in the disclosure should be defined on the basis of the meaning of the terms and the contents throughout the disclosure rather than simple names of the terms.

In the disclosure, an expression "have," "may have," "include," "may include," or the like, indicates existence of a corresponding feature (for example, a numerical value, a function, an operation, a component such as a part, or the like), and does not exclude existence of an additional feature.

An expression "at least one of A and/or B" is to be understood to represent "A" or "B" or "any one of A and B."

Expressions "first," "second," "1st" or "2nd" or the like, used in the present disclosure may indicate various components regardless of a sequence and/or importance of the components, will be used only in order to distinguish one component from the other components, and do not limit the corresponding components.

When it is mentioned that any component (for example, a first component) is (operatively or communicatively) coupled with/to or is connected to another component (for example, a second component), it is to be understood that any component is directly coupled to another component or may be coupled to another component through the other component (for example, a third component).

Singular forms are intended to include plural forms unless the context clearly indicates otherwise. It will be further understood that terms "include" or "formed of" used in the present specification specify the presence of features, numerals, steps, operations, components, parts, or combinations thereof mentioned in the present specification, but do not preclude the presence or addition of one or more other features, numerals, steps, operations, components, parts, or combinations thereof.

In the disclosure, a "unit", "module", "interface", or a terms with "~er/or" may perform at least one function or operation, and be implemented by hardware or software or be implemented by a combination of hardware and software. In addition, a plurality of "modules" or a plurality of "~ers/~ors" may be integrated in at least one module and be implemented by at least one processor except for a "module" or a "~er/or" that needs to be implemented by specific hardware.

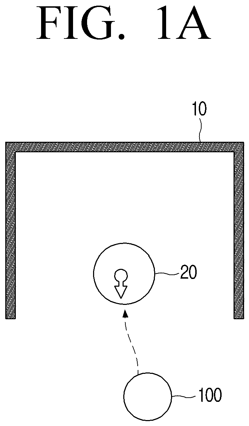

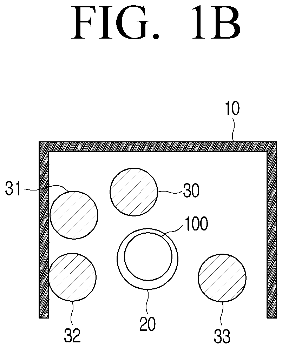

FIGS. 1A and 1B are diagrams illustrating a method of controlling a robot according to an embodiment.

Referring to FIGS. 1A and 1B, a robot 100 may reach a destination by traveling in a traveling space. For example, the robot 100 may provide a service of transmitting an object to a specific location or serving food. However, the disclosure is not limited thereto, and as such, according to another embodiment, the robot 100 may be configured to provide other types of services. The robot 100 may pre-store map information corresponding to the traveling space in order to travel in the traveling space, and may travel in the space by creating a route based on the map information. According to an embodiment, the traveling space may refer to an area or an environment in which the robot may move.

According to an embodiment, the robot 100 may reach a destination via at least one stopover included in a traveling route. When the stopover included in the traveling route is a specific space, for example, an elevator, the robot 100 needs to move to the destination via the specific space. However, the disclosure is not limited to an elevator, and as such, according another embodiment, the specific space may include other areas, environment or surroundings, through which the robot 100 may pass through to reach its destination.

Referring to FIG. 1A, according to an example, the robot 100 may enter a specific space 10 that is a stopover on a traveling route to reach a destination. In this case, the robot 100 may identify a space in a specific space where the robot 100 may be located, and may be located in one area 20 of the specific space (e.g., the elevator). According to an embodiment, the robot may further identify an orientation (indicated by the arrow in FIG. 1A) to face in the specific space.

Meanwhile, as illustrated in FIG. 1B, when a plurality of objects 30, 31, 32 and33, exist in a specific space 10, the robot 100 needs to create a traveling route in consideration of the objects 30 to 33 in the specific space. For example, each of the plurality of objects 30 to 33 may be a person on the elevator.

According to an example, the robot 100 may identify locations of the objects 30 to 33 in a specific space, and identify an area within the specific space where the robot 100 may be located based on the identified location. In this case, in order not to interfere with the passage of the objects 30 to 33 existing in the same specific space as the robot 100, the robot 100 may identify the area within a specific space where the robot 100 may be located based on the locations of the objects 30 to 33.

Alternatively, according to an example, the robot 100 may identify the area within the specific space where the robot 100 will be located based on traveling information, for example, information on the time the robot 100 gets off the specific space 10 and moves to a next stopover. For example, the robot 100 may identify an area within a specific space where the robot 100 is easy to get off the vehicle.

Hereinafter, various embodiments of robot traveling in a specific space will be described in consideration of traveling information of an object or a robot existing in a specific space, such as an elevator.

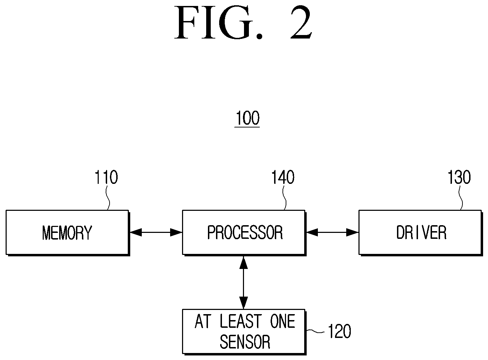

FIG. 2 is a block diagram illustrating a configuration of a robot according to an embodiment.

According to FIG. 2, the robot 100 may include a memory 110, at least one sensor 120, a driver 130, and one or more processors 140.

The memory 110 may store data necessary for various embodiments. The memory 110 may be implemented in a form of a memory embedded in the robot 100 or a form of a memory detachable from the robot 100, depending on a data storage purpose. For example, data for driving the robot 100 may be stored in the memory embedded in the robot 100, and data for an extension function of the robot 100 may be stored in the memory attachable to and detachable from the robot 100.

Meanwhile, the memory embedded in the robot 100 may be implemented in at least one of, for example, a volatile memory (for example, a dynamic random access memory (DRAM), a static RAM (SRAM), a synchronous dynamic RAM (SDRAM), or the like), a non-volatile memory (for example, a one time programmable read only memory (OTPROM), a programmable ROM (PROM), an erasable and programmable ROM (EPROM), an electrically erasable and programmable ROM (EEPROM), a mask ROM, a flash ROM, a flash memory (for example, a NAND flash, a NOR flash, or the like), a hard drive, and a solid state drive (SSD)). In addition, the memory detachable from the robot 100 may be implemented in the form of the memory card (e.g., compact flash (CF), secure digital (SD), micro secure digital (Micro-SD), mini secure digital (Mini-SD), extreme digital (xD), multi-media card (MMC), etc.), external memory (e.g., USB memory) connectable to a USB port, and the like.

According to an embodiment, the memory 110 may store the map information on the traveling space. Here, the traveling space means a space where the robot 100 is currently traveling or is scheduled to travel.

At least one sensor 120 (hereinafter referred to as a sensor) may include a plurality of sensors of various types. The sensor 120 may measure a physical quantity or detect an operating state of the robot 100 and convert the measured or sensed information into an electrical signal. The sensor 120 may include a camera, and the camera may include a lens for focusing visible light and other optical signals received after being reflected by an object into an image sensor, and an image sensor capable of detecting visible light and other optical signals. Here, the image sensor may include a 2D pixel array divided into a plurality of pixels.

Meanwhile, the camera according to an example may be implemented as a depth camera. Also, according to an example, the sensor 120 may include a thermal imaging sensor that reads a shape as well as a distance sensor such as a light detection and ranging (LiDAR) sensor and a time of flight (TOF) sensor.

However, the sensor 120 is not limited thereto, and according to an embodiment, the robot 100 may also acquire the above-described sensing data from an external device through a communication interface.

The driver 130 is a device capable of traveling the robot 100. The driver 130 may adjust a traveling direction and a driving speed under the control of the processor 140. The driver 130 according to an example may include a power generating device (e.g., a gasoline engine, a diesel engine, a liquefied petroleum gas (LPG) engine, an electric motor, etc. depending on fuel (or energy source) used) that generates power for the robot 100 to drive, and a steering device (e.g., manual steering, hydraulics steering, electronic control power steering (EPS), etc.) for controlling a traveling direction, traveling devices (e.g., wheels, propellers, etc.) that drive the robot 100 according to power, etc. Here, the driver 130 may be modified according to the traveling type (e.g., wheel type, walking type, flight type, etc.) of the robot 100.

According to an embodiment, one or more processors 140 (hereinafter referred to as the processor) are electrically connected to the memory 110, at least one sensor 120 and the driver 130 to control the overall operation of the robot 100. The processor 140 may include one or a plurality of processors. Specifically, the processor 140 may perform an operation of the robot 100 according to various embodiments of the present disclosure by executing at least one instruction stored in a memory.

According to an embodiment, the processor 140 may be implemented by a digital signal processor (DSP), a microprocessor, a graphics processing unit (GPU), an artificial intelligence (AI) processor, a neural processing unit (NPU), or a time controller (TCON) that processes a digital image signal. However, the processor 140 is not limited thereto, but may include one or more of a central processing unit (CPU), a micro controller unit (MCU), a micro processing unit (MPU), a controller, an application processor (AP), a communication processor (CP), and an ARM processor, or may be defined by these terms. In addition, the processor 140 may be implemented by a system-on-chip (SoC) or a large scale integration (LSI) in which a processing algorithm is embedded, or may be implemented in the form of an application specific integrated circuit (ASIC) and a field programmable gate array (FPGA).

According to an embodiment, the processor 140 may be implemented by a digital signal processor (DSP), a microprocessor, or a time controller (TCON). However, the processor 140 is not limited thereto, but may include one or more of a central processing unit (CPU), a micro controller unit (MCU), a micro processing unit (MPU), a controller, an application processor (AP), a communication processor (CP), and an ARM processor, or may be defined by these terms. In addition, the processor 140 may be implemented by a system-on-chip (SoC) or a large scale integration (LSI) in which a processing algorithm is embedded, or may be implemented in a field programmable gate array (FPGA) form.

According to an embodiment, one or more processors 140 may identify a specific space as a plurality of subspaces.

According to one example, the processor 140 may first identify whether a specific space is included as a stopover on the identified traveling route based on the map information on the traveling space stored in the memory 110. That is, the processor 140 may identify whether the robot 100 is moving via a specific space while moving to a destination.

Here, the specific space is a part of the traveling space of the robot 100, and may be, for example, a closed space (e.g., an elevator) where objects (e.g., a person) move in and out frequently. That is, the specific space may be a closed space where at least one object (e.g., a person) is sensed. However, the specific space is not limited thereto, and as such, according to another embodiment, even if the specific space is not the closed space, the specific space may be a space where there is a possibility that it would be difficult to move the robot 100, such as a space where movement of an object within a traveling space is detected more than a predetermined number of times. For instance, the specific space may be an area in which a plurality of objects may be moving in and out of the area such that it would be difficult to maneuver the robot within the area. According to an example, the object may be at least one of a dynamic object and a static object.

Meanwhile, according to an example, the memory 110 may include information on a specific space together with the map information on the traveling space. The information on the specific space including information on the location or area of the specific space in the driving map may be pre-stored in the memory 110 at the time of initial setting. However, the disclosure is not limited thereto, and as such, the information on the specific space may be acquired based on the user input.

According to one example, the processor 140 may identify the specific space as the plurality of subspaces when the specific space is included as the stopover. For example, when it is identified that the specific space is included on the identified traveling route based on the map information on the traveling space, the processor 140 may identify the specific space as the plurality of subspaces.

Here, the subspaces may be classified according to preset criteria. For example, the subspace may be a space classified according to the physical structure of the specific space, but is not limited thereto and can be classified according to various criteria. According to an example, the processor 140 may identify the plurality of subspaces based on at least one of and user input data, and a size (or area) of the subspaces may have a different value for each subspace.

According to an embodiment, the processor 140 may identify priorities of each of the plurality of subspaces. Here, the priority means a relative order of each of the plurality of subspaces. The robot 100 may set a traveling route within a specific space based on information on priorities corresponding to each of the plurality of subspaces.

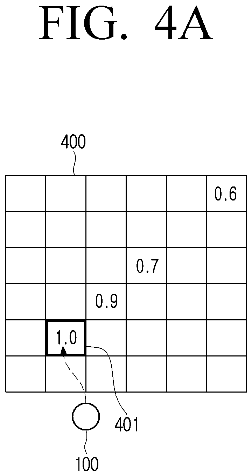

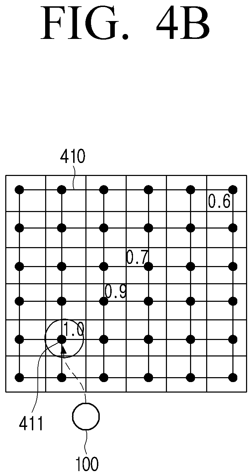

Meanwhile, according to an example, the priorities of each of the plurality of subspaces may be identified based on at least one of a location of an object within a specific space, a predicted departure time to the next stopover of the robot 100, or a user input. This will be described in detail with reference to FIGS. 4 to 6.

According to an embodiment, the processor 140 may identify the location of the object within the specific space based on the sensing data acquired through at least one sensor 120.

According to an example, when at least one sensor 120 is implemented as a LiDAR or a depth camera, the processor 140 may identify the object (e.g., a person) located within the specific space based on the sensing data acquired through the sensor 120. In addition, at least one sensor 120 may include an RGB camera, and the processor 140 may identify positional movement information of an object together with information on a relative location of the object located within the specific space.

According an embodiment, the processor 140 may update the priorities of each of the plurality of subspaces based on at least one of the identified location of the object or a predicted departure time to a next stopover within the traveling route.

Here, according to an example, when the specific space is the elevator, the processor 140 may predict a departure time to the next stopover where the robot is scheduled to move via the elevator based on the traveling route, and identify the predicted departure time to the next stopover within the traveling route based on the predicted departure time.

For example, the processor 140 may identify, based on the traveling route, a height of a floor where the robot 100 currently enters the elevator and a height of a floor where the robot 100 is scheduled to get off, and predict the time when the robot 100 gets off the elevator based on the number of floors to be moved identified based on the height of the floor. According to an embodiment, the floor where the robot 100 is scheduled to get off the elevator may be the next stopover. In this case, the processor 140 may predict the time when the robot 100 gets off the elevator based on the information on the number of times the elevator stops and the time the elevator stops while the robot 100 gets on the elevator. The above-described information on the number of times of stop and the stop time of the elevator may be acquired based on, for example, audio information indicating the current floor of the elevator.

However, the above-described information is not limited thereto, and for example, the processor 140 may identify information on a floor where the elevator is currently located based on the image information acquired through the camera. The processor 140 may identify the current floor where the elevator which the robot 100 currently gets on is located, and predict the scheduled getting off time of the robot 100 based on the identified current layer.

Next, according an example, when at least one of the location of the object in the specific space or the predicted departure time to the next stopover in the traveling route is identified, the processor 140 may update the priority for the subspace based on the identification.

For example, the processor 140 may identify the location of the object in the specific space and set the priority of the subspace existing at a location separated by a predetermined distance from the location of the identified object to be higher than priorities of other subspaces. Alternatively, the processor 140 may set a priority of a subspace closest to the location of the identified object to be lower than priorities of other subspaces.

In addition, for example, when the predicted departure time to the next stopover within the traveling route is identified, the processor 140 may identify a remaining traveling time within a specific space of the robot 100 based on the identified predicted time, and when it is identified that the remaining traveling time is less than a threshold time, the processor 140 may set a priority of a subspace corresponding to a specific location (e.g., a location closest to an elevator door) within a specific space to be higher than priorities of other subspaces.

According to an embodiment, the processor 140 may control the driver 130 to move the robot 100 based on the updated priority. According to an example, the processor 140 may identify a subspace having the highest priority based on the updated priority information, and control the driver 130 to move the robot 100 to the subspace having the highest priority.

According to an example, the processor 140 may identify the subspace having the highest priority, that is, a subspace having a top priority, based on the updated priority, and control the driver 130 to move the robot 100 to the identified subspace having the top priority.

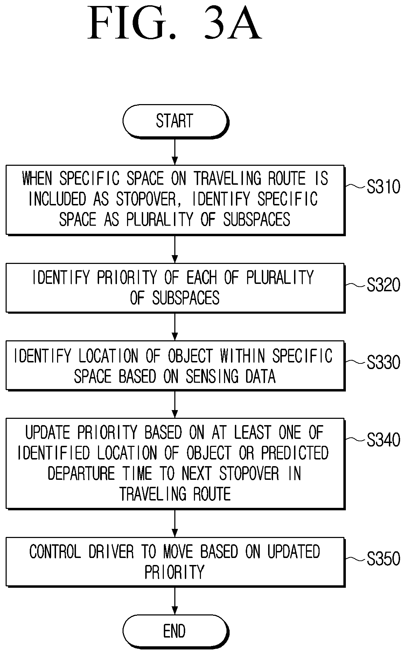

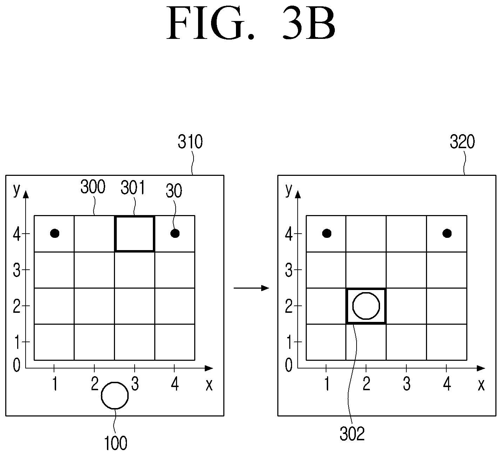

FIG. 3A is a flowchart for describing a method of controlling a robot according to an embodiment, and FIG. 3B is a diagram for describing a method of controlling a robot according to an embodiment.

According to an embodiment illustrated in FIG. 3A, the control method may identify a specific space as a plurality of subspaces when a specific space is included as a stopover on a traveling route (S310). According to an example, when it is identified that a specific space 300 is included as a stopover on a traveling route, as illustrated in FIG. 3B, the processor 140 may identify the specific space 300 as a plurality of subspaces. For example, the processor 140 may identify or obtain a plurality of subspaces within the specific space. Here, the plurality of subspaces illustrated in FIG. 3B is obtained by dividing an area corresponding to a specific space in a map of traveling space into a plurality of areas.

In this case, according to an example, coordinate information corresponding to each of the plurality of subspaces may be identified. Referring to FIG. 3B, each subspace may have an x-axis value and a y-axis value based on the subspace at the lower left. For example, the subspace at the lower left may have a coordinate value of (1,1).

Subsequently, according to an embodiment, the control method may identify the priorities of each of the plurality of subspaces (S320). According to an example, the processor 140 may identify priorities based on the relative locations of each of the plurality of subspaces when the location of the object is not identified within the specific space or the predicted departure time to the next stopover is not identified.

For example, referring to FIG. 3B, the processor 140 may identify priorities of subspaces (subspaces corresponding to coordinate values (2,2), (3,2), (2,3) and (3,3)) existing in a location close to a center of a specific space among a plurality of identified subspaces as a higher priority than other subspaces. In the case of the elevator, since the location where the robot 100 easily gets on and off is the center of the elevator, the center of the elevator may be set as a high priority in consideration of the location.

Next, according to an embodiment, the control method may identify a location of an object within a specific space based on the sensing data (S330).

According to one example, referring to FIG. 3B, when the robot 100 has not yet entered a specific space (310), the processor 140 may identify a relative location of an object 30 within a specific space based on the sensing data acquired through LiDAR.

For example, when the robot 100 has not yet entered the specific space (310), the processor 140 may identify that the object 30 is located in specific subspaces (subspaces corresponding to coordinate values (1,4) and (4,4)).

In this case, according to an example, the processor 140 may identify at least one subspace where the object is located based on the location of the object 30 within the identified specific space.

Then, according to an embodiment, the control method may update the priority based on at least one of the location of the identified object or the predicted departure time to the next stopover within the traveling route (S340), and control the driver 130 to move the robot 100 based on the updated priority.

According to an example, when the location of the object 30 is first identified (310), the processor 140 may update the priority identified based on the relative location information of the subspace based on the location of the object 30. In this case, the processor 140 may identify the location of the object 30 in real time through at least one sensor 120.

For example, the processor 140 may identify subspaces (subspaces corresponding to coordinate values (2,2) and (3,2)) whose distance from the object is greater than or equal to a preset distance among subspaces (subspaces corresponding to coordinate values (2,2), (3,2), (2,3), and (3,3)) located at the center of the specific space, and identify the identified subspaces as the subspace having the top priority. As in example above, by setting a distance between the object (e.g., a person) and the robot 100 to be greater than or equal to the preset distance, it is possible to prevent inconvenience to a person riding the elevator together.

Meanwhile, according to an example, a plurality of subspaces having the same priority may exist. In this case, the processor 140 may randomly identify any one of the plurality of subspaces having the same priority, and may control the driver 130 to move the robot 100 to any one of the identified subspaces. As in the case of FIG. 3B, when a plurality of subspaces (subspaces corresponding to coordinate values (2,2) and (3,2)) having a distance from an object greater than a predetermined distance among subspaces located at the center of a specific space are identified, the processor 140 may arbitrarily identify any one of the subspaces and control the driver 130 to move the robot 100 to any one of the identified subspaces. However, the processor 140 is not limited thereto, and as such, according to another embodiment, the processor 140 may apply another method to any one of the subspaces having the same priority and control the driver 130 to move the robot 100 to any one of the identified subspaces.

Next, according to an example, the processor 140 may control the driver 130 based on the updated priority. For example, when it is identified that any one of the subspaces 302 is the top priority according to the updated priority, the processor 140 may control the driver 130 to move the robot 100 to the subspace 302 corresponding to the identified top priority.

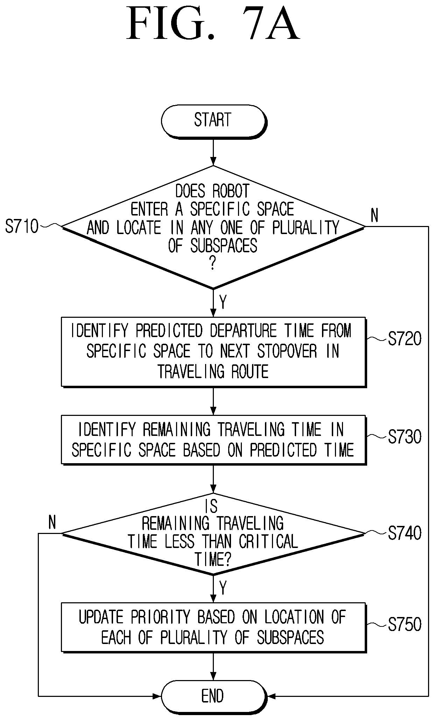

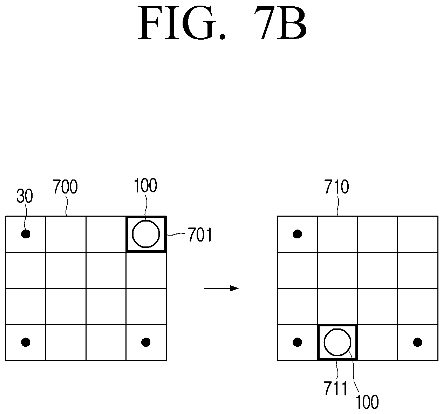

Alternatively, according to an example, the processor 140 may identify the predicted departure time to the next stopover within the traveling route based on the traveling route, and update the priority based on the identified predicted departure time. This will be described in detail with reference to FIGS. 7A and 7B.

According to the example described above, when the robot 100 travels in a specific space such as an elevator, the robot 100 may travel in the specific space in consideration of the scheduled getting off time or the location of the object within the specific space. Accordingly, the robot 100 may not only efficiently move to a next stopover, but also reduce discomfort that a person in a specific space may feel.

FIGS. 4A and 4B are diagrams for describing a priority of a subspace according to an embodiment.

According to an embodiment, the processor 140 may identify weight values corresponding to each of a plurality of subspaces, and identify priorities corresponding to each of the plurality of subspaces based on the sizes of the identified weight values. The weight values corresponding to each of the plurality of subspaces have relative values for each subspace, and may have values between 0 and 1 according to an example, but are not limited thereto.

According to an example, the processor 140 may identify the weight values corresponding to each of the plurality of subspaces based on at least one of the identified location of the object, the predicted departure time to the next stopover within the traveling route, or the information on the relative locations of the plurality of subspaces within the specific space, and identify the priorities of each of the plurality of subspaces based on the sizes of the identified weight values.

In this case, according to an example, the weight values corresponding to each of the plurality of subspaces may be included in area of interest (AOI) information, and the AOI information may be pre-stored in the memory 110. Here, the AOI is an area set as a region of interest, and is different from a point of interest (POI) in which a specific point is set as a region of interest. Accordingly, the POI information may include only information on the specific point, and the AOI may include information on the specific area (or information on at least one specific point included in a specific area).

According to an example, when the specific space is identified as the AOI, the processor 140 may acquire the AOI information on the specific space by mapping weight values corresponding to each of the plurality of subspaces within the specific space. For example, the AOI information may be at least one of a grid type or a graph type.

According to an embodiment, the AOI information may be grid type information as illustrated in FIG. 4A. According to an example, when weight values corresponding to priorities of each of the plurality of subspaces are identified, the processor 140 may map the identified weight values to each of the grids corresponding to the plurality of subspaces to acquire the AOI information.

For example, when the weight value of the subspace 401 corresponding to the coordinate value (2,2) is identified as 1.0, the processor 140 may acquire the AOI information by mapping the identified weight value to the corresponding subspace.

Meanwhile, according to an embodiment, the AOI information may be graph type information as illustrated in FIG. 4B. Here, a data structure in which nodes and edges connecting the nodes are gathered together is called a graph model, which is generally used to express relationships between connected objects.

According to an example, the processor 140 may acquire the AOI information by mapping the identified weight values to each node corresponding to a plurality of subspaces. For example, when the weight value of the subspace 411 corresponding to the coordinate value (2,2) is identified as 1.0, the processor 140 may acquire the AOI information by mapping the identified weight value to the corresponding subspace.

According an embodiment, the processor 140 may update the weight values included in the AOI information based on at least one of the identified location of the object or a predicted departure time to a next stopover within the traveling route. According to another embodiment, the processor 140 may update the weight values based on the location information of each subspace included in the specific space.

Meanwhile, according to an embodiment, when the weight values corresponding to each subspace are updated, the processor 140 may update the priority of the subspace based on the sizes of the weight values corresponding to each subspace.

According an embodiment, the processor 140 may first update the weight values included in the AOI information based on at least one of the identified location of the object or a predicted departure time to a next stopover within the traveling route, and In addition, the processor 140 may acquire the updated AOI information.

Subsequently, according to an example, the processor 140 may identify whether there is a subspace having an updated weight value greater than or equal to a threshold value. For example, the processor 140 may identify whether a subspace having an updated weight value of 0.9 or greater is newly identified. However, the threshold value is not limited thereto, and as such, according to another embodiment, the threshold value may have different values according to user input.

Subsequently, according to an example, when it is identified that there is the subspace having the updated weight value greater than or equal to the threshold value, the processor 140 may update priorities of each of the plurality of subspaces based on the updated weight value. For example, when a subspace having an updated weight value of 0.9 or greater is newly identified, the processor 140 may update the priorities of each of the plurality of subspaces based on the updated weight value.

That is, when the subspace having the updated weight value greater than or equal to the threshold value is newly identified, since the possibility that the priority of the subspace will change increases, the processor 140 may update the priority based on the newly identified subspace whose updated weight value is greater than or equal to the threshold value.

Alternatively, according to an example, the processor 140 may identify the subspace having the largest weight value within the plurality of subspaces based on the updated weight value, and when it is identified that the subspace having the largest weight value is changed, update the priority of the subspace based on the updated weight value.

For example, it is assumed that an object is newly identified in a specific space. The processor 140 may update the weight value included in the AOI information based on the location of the newly identified object, and when it is identified that the subspace having the largest weight value is changed based on the updated weight value, update the priority of the subspace based on the updated weight value.

Next, according to an example, the processor 140 may control the driver 130 based on the updated priority. According to an embodiment, when the subspace having the top priority changes as the priority is updated, the processor 140 may control the driver 130 to move the robot 100 to the subspace having the top priority.

However, the processor 140 is not limited thereto, and according to an embodiment, the processor 140 may control the driver 130 based on the updated weight value. According to an example, the processor 140 may identify a subspace having a maximum weight value based on the updated AOI information, and may control the driver 130 to move the robot 100 to the identified subspace.

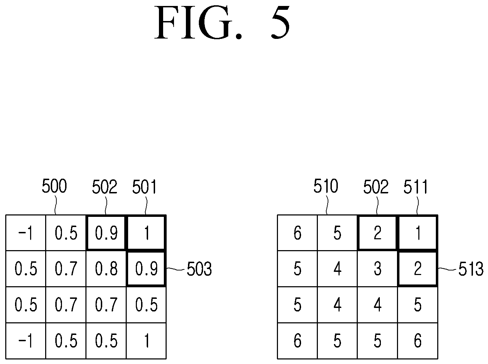

FIG. 5 is a diagram for describing a relationship between a weight value and a priority according to an embodiment.

Referring to FIG. 5, according to an embodiment, the processor 140 may identify priorities of the plurality of subspaces based on weight values corresponding to each of the plurality of subspaces.

According to an example, when the weight values of each of the plurality of subspaces are identified based on at least one of the location of the identified object or the departure time predicted for the next stopover within the traveling route, the processor 140 may acquire the AOI information 500 including the identified weight values.

According to an example, the processor 140 may identify whether there is the subspace having the weight value greater than or equal to the threshold value based on the acquired AOI information 500. For example, the processor 140 may identify subspaces 501 to 503 having a weight value greater than or equal to 0.9.

According to an example, when it is identified that there is the subspace having the weight value greater than or equal to the threshold value, the processor 140 may identify the priorities of the plurality of subspaces based on the weight values. For example, the processor 140 may identify the information 510 on the priorities of each subspace based on the identified weight value and the order of sizes of the weight values. Meanwhile, the disclosure is not limited thereto, and as such, according to another embodiment, the information 510 on the priorities of each subspace may also be included in the AOI information.

The processor 140 may identify the priorities of the plurality of subspaces including the subspace 511 having the top priority, and control the driver 130 to move the robot 100 to the subspace 511 having the top priority based on the identified priorities.

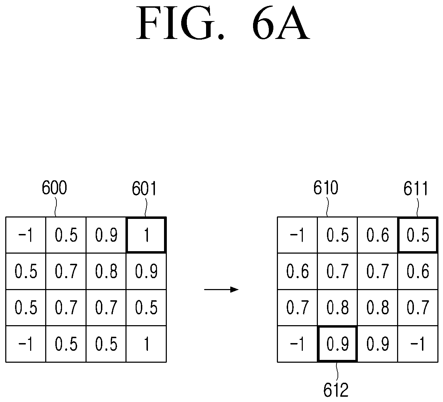

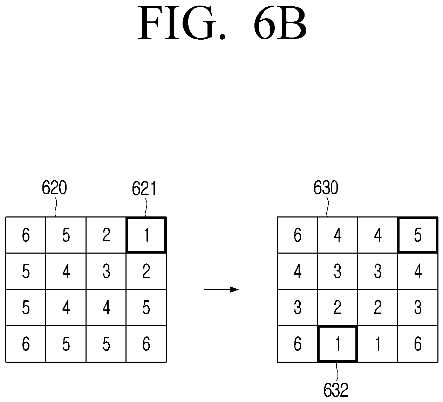

FIGS. 6A and 6B are diagrams for describing a method of updating a weight value or a priority according to an embodiment.

Referring to FIG. 6A, according to an embodiment, the processor 140 may update the weight values included in the AOI information based on at least one of the identified location of the object or the predicted departure time to the next stopover within the traveling route.

First, according to an example, the AOI information 600 including the weight values corresponding to each of the plurality of subspaces may be stored in the memory 110. In this case, the robot 100 may be located in the subspace 601 having the largest weight value.

Next, according to an example, when it is identified that the remaining time is less than the threshold value based on the predicted departure time, the processor 140 may acquire the updated AOI information 610 by updating the weight value included in the AOI information 600.

For example, it is assumed that the specific space is the elevator. When it is identified that the remaining time is less than the threshold time of 10 seconds, the processor 140 may update the weight value of the subspace based on the identification so that the weight values of the subspaces (subspaces corresponding to the coordinate values (2,1) and (3,1)) close to the entrance of the elevator are maximum. In addition, the processor 140 may update the weight value so that the size of the weight value of the subspace 611 having the largest distance from the entrance of the elevator is minimized.

According to an embodiment, when the weight value is updated, the processor 140 may identify whether there is the subspace having the updated weight value greater than or equal to the threshold value.

According to an example, the processor 140 may identify whether there is the subspace having the weight value greater than or equal to the threshold value (e.g., 0.9) based on the AOI information 610 including the updated weight value. In the case of FIG. 6A, the subspaces 612 (subspaces corresponding to the coordinate values (2,1) and (3,1)) close to the entrance of the elevator can be identified as having the weight value greater than or equal to the threshold value.

According to an embodiment, when it is identified that there is the subspace having the updated weight value greater than or equal to the threshold value, the processor 140 may update priorities of each of the plurality of subspaces based on the updated weight value.

According to an example, the processor 140 may update information 620 on the priorities corresponding to the plurality of subspaces as it is identified that there is the subspace having the updated weight value greater than or equal to the threshold value, and thus acquire the information 630 on the updated priority. As illustrated in FIG. 6B, a priority of a subspace 621 having a top priority before a weight value is updated may change based on the updated weight value, and a subspace 632 having a top priority after a weight value is updated may be different from the subspace 621 having the top priority prior to being updated.

According to an embodiment, the processor 140 may control the driver 130 to move the robot 100 based on the updated priority.

According to an example, as a subspace 632 having a top priority according to the updated priority is different from the subspace 621 having the top priority prior to being updated, the processor 140 may control the driver 130 to move the robot 100 to the subspace 632 having the top priority according to the updated priority.

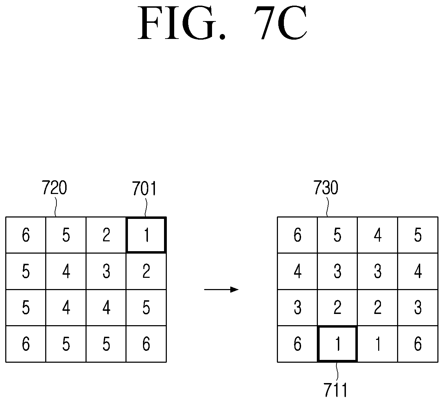

FIG. 7A is a flowchart for describing a method of controlling a robot according to an embodiment and FIGS. 7B and 7C are diagrams for describing a method of driving a robot according to an embodiment.

According to an embodiment in FIG. 7A, the control method may identify whether the robot 100 enters a specific space and is located in any one of a plurality of subspaces (S710). According to one example, referring to FIG. 7B, the processor 140 may identify based on the sensing data acquired through the sensor 120 whether the robot 100 enter a specific space 700 and is located in any one of the plurality of subspaces 701.

According to an embodiment, when it is identified that the robot 100 enters the specific space and is located in any one of the plurality of subspaces (Y), the control method may identify the predicted departure time to the next stopover in the traveling route in the specific space (S720). According to an example, when the specific space is the elevator, if it is identified that the robot 100 is located in any one 701 of the plurality of subspaces, the processor 140 may identify the height of the floor where the robot 100 has entered the elevator and the height of the floor where the robot 100 is scheduled to get off based on the traveling route, and identify the predicted departure time (or scheduled getting off time of the robot 100) of the robot 100 to the next stopover based on the identified heights.

According to an embodiment, the control method may identify the remaining traveling time within the specific space based on the predicted time (S730). According to an example, the processor 140 may compare the current time and the predicted departure time to identify the remaining traveling time within the specific space.

Then, according to an embodiment, the control method may identify whether the remaining traveling time is less than the threshold time (S740). According to an example, the processor 140 may identify whether the remaining traveling time is less than the threshold time by comparing the remaining traveling time with the threshold time. Meanwhile, the threshold time may be a value stored in the memory 110 when initially set, but is not limited thereto, and the size of the threshold time may be changed based on the user input thereafter.

Then, according to an embodiment, if it is identified that the remaining traveling time is less than the threshold time (Y), the control method may update the priorities based on the locations of each of the plurality of subspaces (S750).

According to one example, when it is identified that the remaining traveling time is less than the threshold time, the processor 140 may update the priorities of the subspaces (subspaces corresponding to the coordinate values (2,1) and (3,1)) close to the entrance of the elevator among the plurality of subspaces to be the subspace having the top priority. That is, the information 720 on the priorities of the plurality of subspaces illustrated in FIG. 7B may be updated to the information 730 on the priorities in which the locations of each of the plurality of subspaces and the predicted departure time to the next stopover are reflected.

In this case, the subspace 701 corresponding to the top priority prior to being updated may change after being updated. In the case of FIG. 7B, the plurality of subspaces (subspaces corresponding to the coordinate values (2,1) and (3,1)) corresponding to the top priority may be identified.

According to an embodiment, when the subspace corresponding to the top priority identified based on the updated priority is identified, the processor 140 may control the driver 130 to move the robot 100 to the identified subspace.

According to an example, the processor 140 may identify any one 711 of the plurality of identified subspaces and control the driver 130 to move the robot 100 to any one of the identified subspaces. Accordingly, the robot 100 moves to any one 711 of the identified subspaces.

Meanwhile, according to an embodiment, the processor 140 may update priorities based on user preference information.

According to an example, the robot 100 may further include a user interface, and when the preference information for each of the plurality of subspaces is received through the user interface, the processor 140 may update the priorities of each of the plurality of subspaces based on the preference information. For example, when subspaces corresponding to a plurality of top priorities are identified as illustrated in FIG. 7C, the processor 140 may identify any one of the subspaces (subspaces corresponding to the coordinate values (2,1) and (3,1)) corresponding to the plurality of top priorities as the subspace corresponding to the top priority based on the user preference information.

Subsequently, according to an example, the processor 140 may control the driver 130 to move the robot 100 based on the updated priority based on the user preference information. In the case of FIG. 7, when any one of the subspaces 711 corresponding to the top priority is identified based on the user preference information, the processor 140 may control the driver 130 to move the robot 100 to the identified subspace 711.

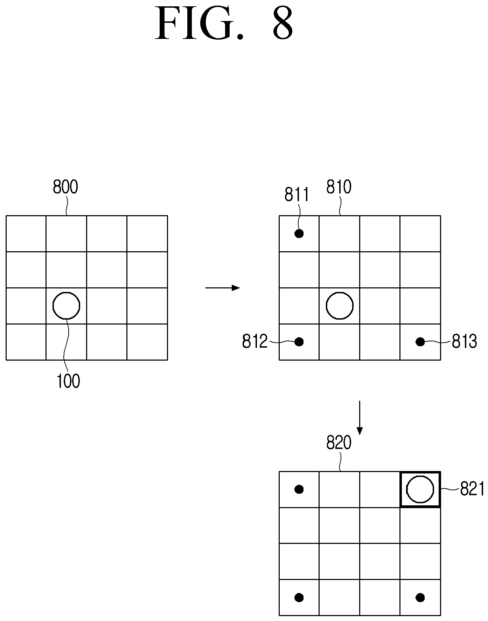

FIG. 8 is a diagram for describing a method of controlling a robot based on a location of an object according to an embodiment.

According to FIG. 8, according to an embodiment, the processor 140 may control the driver 130 to move the robot 100 based on at least one of the number or locations of subspaces where objects are located.

According to an example, the processor 140 may first identify whether the robot 100 enters the specific space and is located in any one of the plurality of subspaces. For example, the processor 140 may identify whether the robot 100 enters the specific space and is located in any one of the subspaces based on the sensing data acquired through the sensor 120.

Subsequently, according to an example, the processor 140 may identify a subspace separated from at least one object by a threshold distance or more based on the location of the subspace where at least one object is located within the specific space.

For example, the case where the robot 100 is located in a specific space 800 where no object is identified, but it is identified that the object enters the specific space and at least one object is located in the specific space is assumed. The processor 140 may identify the locations of the objects 811, 812 and 813 within the specific space 810 based on the sensing data acquired through the sensor 120, and the location of the subspace where the objects 811, 812 and 813 are located based on the identified locations.

As the locations of the subspaces where the objects 811 to 813 are located are identified (the locations of the subspaces corresponding to the coordinate values (1,1), (4,1), and (1,4)), the processor 140 may identify the subspace 821 corresponding to the coordinate value (4, 4) as a subspace separated from each of the identified subspaces by a threshold distance (e.g., a distance corresponding to two subspaces) or more. However, the threshold distance is not limited thereto, and as such, according to another embodiment, the threshold distance may change according to the user input.

Then, according to an example, the processor 140 may control the driver 130 to move the robot 100 to the identified subspace 821.

Meanwhile, in the case of FIG. 8, the processor 140 has been described as an embodiment in which the driver 130 is controlled so that the robot 100 moves to the subspace separated by the threshold distance from the location of the subspace where the identified object is located, but is not limited thereto. According to another embodiment, the processor 140 may control the driver 130 to move the robot 100 according to the updated priority based on the location of the object.

According to the above-described example, the robot 100 may be located at a distance separated from an object existing in the specific space, and thus the robot moves so as not to cause inconvenience to a passage of objects such as people located in the specific space.

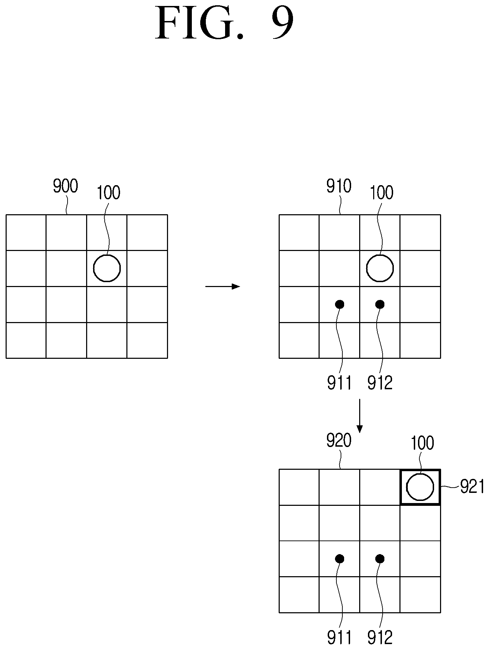

FIG. 9 is a diagram for describing the method of controlling a robot based on the number of objects according to an embodiment.

According to an embodiment in FIG. 9, the processor 140 may control the driver 130 to move the robot 100 based on at least one of the number or locations of subspaces where objects are located.

According to an example, the processor 140 may first identify whether the robot 100 enters the specific space and is located in any one of the plurality of subspaces. For example, the processor 140 may identify whether the robot 100 enters the specific space and is located in any one of the subspaces based on the sensing data acquired through the sensor 120.

According to an example, the processor 140 may identify the number of the subspace where at least one object is located within the specific space, and when it is identified that the number of identified subspaces is greater than or equal to the threshold number, may identify the subspace separated from at least one object by a threshold distance or more.

For example, the case where the robot 100 is located in a specific space 900 where no object is identified, but it is identified that the object enters the specific space and at least one object is located in the specific space is assumed. The processor 140 may identify objects 911 and 912 within a specific space 910 based on the sensing data acquired through the sensor 120, and identify based on the identified objects 911 and 912 that the number of subspaces where objects are located within the specific space 910 is two.

As the number of subspaces where the objects 911 and 912 are located in the specific space 910 is the threshold number of two or greater, the processor 140 may identify a subspace corresponding to coordinate values (4,4) and a subspace corresponding to coordinate values (1,4) as subspaces spaced apart from each of the plurality of identified subspaces by a threshold distance (for example, a distance corresponding to 2 subspaces) or more. However, the threshold number is not limited thereto, and as such, according to another embodiment, the threshold number may change according to the user input.

Then, according to an example, the processor 140 may control the driver 130 to move the robot 100 to the identified subspace. For example, the processor 140 may identify any one of the identified subspaces (coordinate values (4,4) and the subspaces corresponding to the coordinate values (1,4)), and control the driver 130 to move the robot 100 to any one of the identified subspace 921. However, the processor 140 is not limited thereto, and for example, the processor 140 may identify any one of the identified subspaces based on the user preference.

According to the above-described example, in the case of a congested situation in which the number of objects in the specific space exceeds the threshold number, the robot 100 may be located at a distance away from the object, and thus travels so as not to cause inconvenience to a passage of objects such as people located in the specific space.

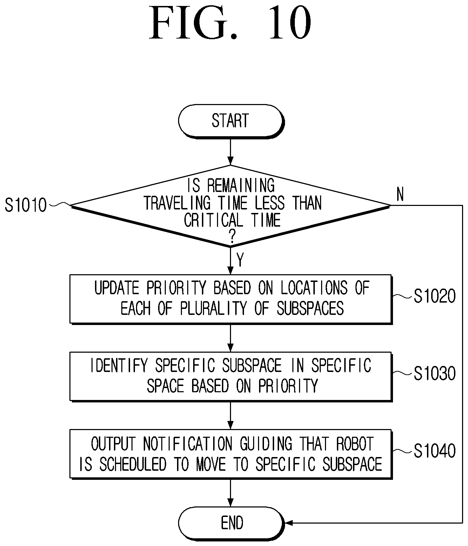

FIG. 10 is a flowchart for describing a method of outputting a notification of a robot according to an embodiment.

According to an embodiment, the robot 100 may further include an output unit, and the processor 140 may control an output unit to output a notification guiding that the robot 100 is scheduled to move to the specific subspace based on the priorities of each of the plurality of subspaces. According to an example embodiment, the output interface may include a hardware component, a software component or a combination of hardware and software components. According to an embodiment, the output interface may include one or more electronic components and/or circuitry.

Referring to FIG. 10, according to an embodiment, the control method may first identify whether the remaining traveling time is less than the threshold time (S1010). For example, the processor 140 may identify the predicted departure time to the next stopover within the traveling route in the specific space, and compare the identified predicted departure time with the current time to identify the remaining traveling time of the robot 100. Subsequently, the processor 140 may identify whether the identified remaining traveling time is less than the threshold time.

Then, according to an example, when the remaining traveling time is less than the threshold time (Y), the control method may update the priorities based on the locations of each of the plurality of subspaces (S1020). For example, when the specific space is the elevator, if it is identified that the remaining traveling time is less than the threshold time, the processor 140 may update the priority so that the subspace close to the entrance of the elevator among the plurality of subspaces become a subspace having a top priority.

Subsequently, according to an example, the control method may identify a specific subspace within the specific space based on the priority (S1030). For example, the processor 140 may identify the subspace having the identified top priority as the specific subspace within the specific space. Meanwhile, when the subspaces having the plurality of top priorities are identified, the processor 140 may identify any one of the subspaces or identify any one of the subspaces based on the user preference, and identify the identified subspace as the subspace having the top priority.

Subsequently, according to an example, the control method may output a notification guiding that the robot is scheduled to move to a specific subspace (S1040).

For example, when the identified subspace having the top priority is different from the subspace where the robot 100 is currently located, the processor 140 may output the notification guiding that the robot 100 is scheduled to move to the subspace having the top priority through the output unit. In this case, the processor 140 may control the driver 130 to move the robot 100 to the subspace having the top priority while the notification is output, or control the driver 130 to move the robot 100 to the subspace having the top priority after the output of the notification ends.

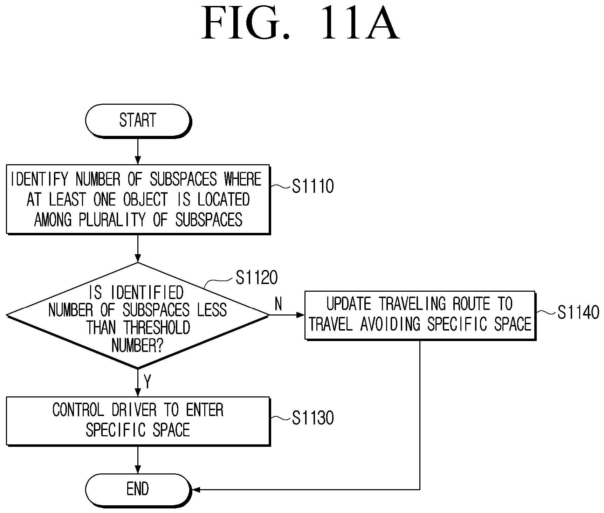

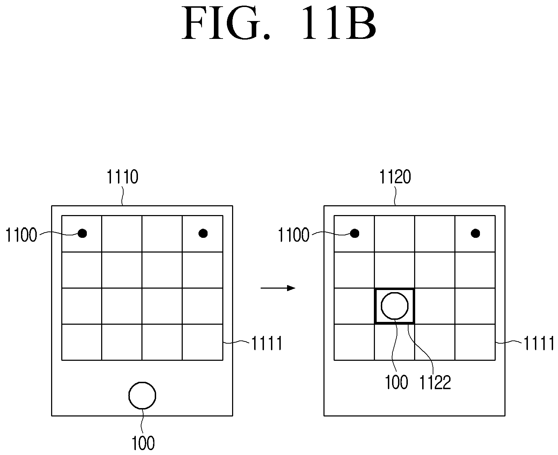

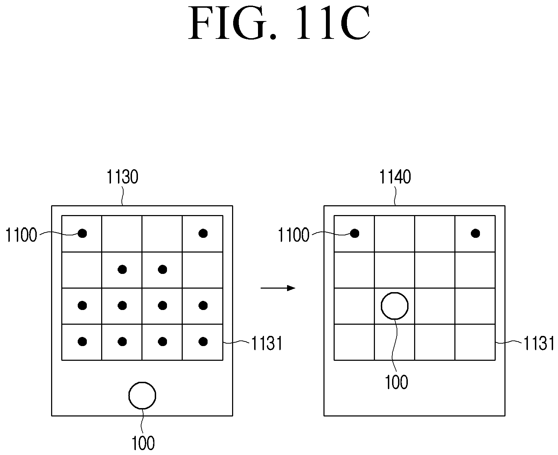

FIG. 11A is a flowchart for describing a method of controlling a robot according to an embodiment and FIGS. 11B and 11C are diagrams for describing the method of controlling a robot based on the number of objects according to an embodiment.

According to an embodiment in FIG. 11A, the control method may identify the number of subspaces where an object of at least one of the plurality of subspaces is located (S1110).

According to an example, the processor 140 may identify the object existing in the specific space based on the sensing data acquired through the sensor 120 and identify the subspace where the identified object is located. Based on this, the processor 140 may also identify the number of identified subspaces. In this case, the number of objects and the number of subspaces where the objects are located may be different.

According to an embodiment, the control method may identify whether the number of identified subspaces is less than the threshold number (S1120). Here, the threshold number may be a value stored at the time of initial setting, but is not limited thereto, and the size of the threshold number may change based on the user input or the like.

According to an embodiment, when the number of identified subspaces is less than the threshold number (Y), the control method may control the driver 130 so that the robot 100 enters the specific space (S1130).

According to one example, as illustrated in the left drawing 1110 of FIG. 11B, when the robot 100 does not enter the specific space 1111, the processor 140 may identify an object 1100 existing in a specific space 1111 based on the sensing data acquired through the sensor 120.

According to an embodiment, the processor 140 may identify the number of subspaces where the object 1100 existing in the specific space 1111 is located as two. As it is identified that the number of identified subspaces is less than the threshold number (e.g., 5), as illustrated in the right diagram 1120 of FIG. 11B, the processor 140 may control the driver 130 so that robot 100 enter the specific space 1111.

In this case, the processor 140 may control the driver 130 so that the robot 100 is located in any one 1122 of the plurality of subspaces based on the location of the object.

Meanwhile, according to an embodiment, when the number of identified subspaces is greater than or equal to the threshold number (N), the control method may update the traveling route to travel while avoiding a specific space (S1140).

According to one example, as illustrated in the left drawing 1130 of FIG. 11C, when the robot 100 does not enter the specific space 1131, the processor 140 may identify an object 1100 existing in a specific space 1131 based on the sensing data acquired through the sensor 120.

According to an embodiment, the processor 140 may identify the number of subspaces where the object 1100 existing in the specific space 1131 is located as 12. As it is identified that the number of identified subspaces is greater than or equal to the threshold number (e.g., 5), the processor 140 may update the traveling route to travel while avoiding the specific space.

For example, it is assumed that the specific space is the elevator. When the number of identified subspaces is greater than or equal to the threshold number, the processor 140 may control the driver 130 so that the robot 100 stops traveling until the next elevator arrives without entering the current elevator.

Subsequently, as illustrated in the right drawing 1140 of FIG. 11C, the processor 140 may identify the number of objects in a next elevator 1141 and the number of subspaces corresponding thereto. The processor 140 may control the driver 130 so that the robot 100 enters the elevator 1141 as it is identified that the number of identified subspaces is less than the threshold number of two.

Meanwhile, according to an example, the case where the plurality of elevators exist, that is, the case where the plurality of specific spaces are identified is assumed. When it is identified that the number of subspaces identified in the first specific space among the plurality of specific spaces is greater than or equal to the threshold number, the processor 140 may control the driver 130 so that the robot 100 enters the second specific space without entering the first specific space.

For example, when it is identified that the number of subspaces of the first specific space of the plurality of specific spaces is a threshold number of 5 or greater, the processor 140 may identify the location of the second specific space based on the map information stored in the memory 110 and control the driver 130 to move the robot 100 to the second specific space.

Subsequently, the processor 140 may identify the number of subspaces where the objects are located in the second specific space, and when it is identified that the identified number is less than a threshold number, control the driver 130 so that the robot 100 enters the second specific space.

According to the above-described example, the robot 100 may enter and travel in the specific space only when the degree of congestion in the specific space is not high, thereby reducing people's discomfort in the specific space.

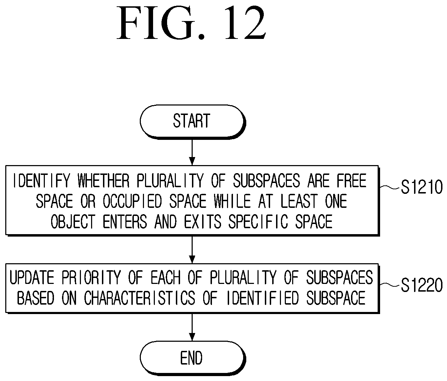

FIG. 12 is a flowchart for describing a method of updating a priority according to an embodiment.

Referring to FIG. 12, according to an embodiment, the control method may identify whether the plurality of subspaces are a free space or an occupied space while at least one object enters or exits the specific space (S1210).

Here, the free space means a subspace not occupied by an object including a dynamic object or a static object. The occupied space means a subspace currently occupied by an object. However, the subspace is not limited thereto, and it may be identified whether the subspace is the free space or the occupied space according to the user input. According to an example, when the user input for setting the specific subspace as the occupied space is received, the processor 140 may identify the specific subspace as the occupied space.

According to an example, the specific space may be a movable closed space. The processor 140 may identify whether the plurality of subspaces in the closed space are the free space or the occupied space based on the sensing data acquired through the sensor 120 while the object enters and exits the closed space.

Then, according to an embodiment, the control method may update priorities of each of the plurality of subspaces based on the characteristics of the identified subspaces (S1220). Here, the characteristics of the subspace mean whether the subspace is the free space or the occupied space.

According to an example, when the priorities of each of the plurality of subspaces are identified based on at least one of the location of the object or the predicted departure time to the next stopover in the traveling route, the processor 140 may update the priorities of each of the subspaces based on the characteristics of the subspace.

For example, when the first subspace identified as the top priority is identified as the occupied space based on the user input, the processor 140 may identify any one of the remaining subspaces as the subspace having the top priority.

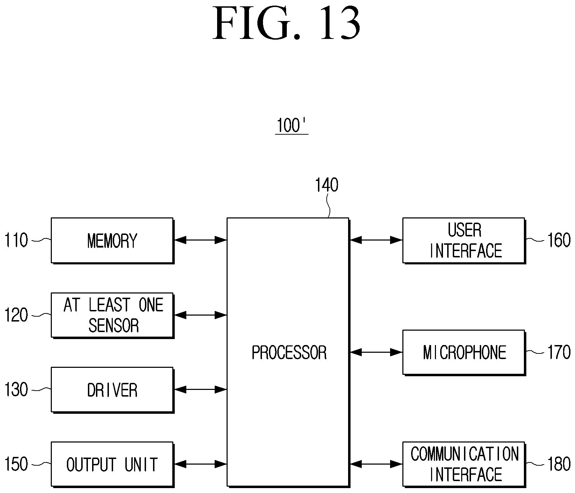

FIG. 13 is a block diagram illustrating a detailed configuration of a robot according to an embodiment.

Referring to FIG. 13, a robot 100' may include a memory 110, at least one sensor 120, a driver 130, one or more processors 140, an output unit 150, a user interface 160, a microphone 170, and a communication interface 180. A detailed description for components overlapped with components illustrated in FIG. 2 among components illustrated in FIG. 13 will be omitted.

The output unit 150 may include a speaker 150-1, a display 150-2, and the like, but is not limited thereto, and may be formed of various embodiments of delivering information in a form that may be sensed by user's five senses.

The speaker 150-1 may include a tweeter for high-pitched sound reproduction, a mid-range sound for mid-range sound reproduction, a woofer for low-pitched sound reproduction, a subwoofer for extremely low-pitched sound reproduction, an enclosure for controlling resonance, a crossover network that divides an electric signal frequency input to the speaker by band, etc.

The speaker 150-1 may output a sound signal to the outside of the robot 100'. The speaker 150-1 may output multimedia reproduction, recording reproduction, various kinds of notification sounds, voice messages, and the like. The robot 100' may include an audio output device such as the speaker 150-1, or may include an output device such as the audio output terminal. In particular, the speaker 150-1 may provide acquired information, information processed/produced based on the acquired information, a response result to a user's voice, an operation result, or the like in the form of voice.

The display 150-2 may be implemented as a display including a self-light emitting element or a display including a non-light emitting element and a backlight. For example, the display may be implemented as various types of displays such as a liquid crystal display (LCD), an organic light emitting diodes (OLED) display, light emitting diodes (LED), a micro LED, a Mini LED, a plasma display panel (PD), a quantum dot (QD) display, and quantum dot light-emitting diodes (QLED). A driving circuit, a backlight unit, and the like, that may be implemented in a form such as a-si TFT, low temperature poly silicon (LTPS) TFT, an organic TFT (OTFT), and the like, may be included in the display 150-2. Meanwhile, the display 150-2 may be implemented as a touch screen coupled with a touch sensor, a flexible display, a rollable display, a 3D display, a display to which a plurality of display modules are physically connected, and the like. The processor 140 may control the display 150-2 to output the output image obtained according to various embodiments described above. Here, the output image may be a high-resolution image of 4K or 8K or higher.

The user interface 160 is a component for the robot 100' to perform an interaction with a user. For example, the user interface 160 may include at least one of a touch sensor, a motion sensor, a button, a jog dial, a switch, a microphone, or a speaker, but is not limited thereto.

The microphone 170 may refer to a module that acquires sound and converts the acquired sound into an electrical signal, and may be a condenser microphone, a ribbon microphone, a moving coil microphone, a piezoelectric element microphone, a carbon microphone, or a micro electro mechanical system (MEMS) microphone. In addition, it may be implemented in nondirectional, bi-directional, unidirectional, sub-cardioid, super-cardioid, and hyper-cardioid methods.

The communication interface 180 may input and output various types of data. For example, the communication interface 180 may transmit and receive various types of data to and from an external device (e.g., source device), an external storage medium (e.g., USB memory), an external server (e.g., web hard), etc., through communication methods such as AP-based Wi-Fi (wireless LAN network), Bluetooth, Zigbee, a wired/wireless local area network (LAN), a wide area network (WAN), Ethernet, IEEE 1394, a high-definition multimedia interface (HDMI), a universal serial bus (UBS), a mobile high-definition link (MHL), an audio engineering society/European broadcasting union (AES/EBU), optical, and coaxial.

According to various embodiments described above, when the robot 100' travels in a specific space such as an elevator, the robot 100' may travel in the specific space in consideration of the scheduled getting off time or the location of the object within the specific space. Accordingly, the robot 100' may not only efficiently move to a next stopover, but also reduce discomfort that a person in a specific space may feel.

Meanwhile, the above-described methods according to various embodiments of the disclosure may be implemented in a form of application that can be installed in the existing robot. Alternatively, the above-described methods according to various embodiments of the disclosure may be performed using a deep learning-based learned neural network (or deep learned neural network), that is, a learning network model. In addition, the above-described methods according to various embodiments of the disclosure may be implemented only by software upgrade or hardware upgrade of the existing robot. In addition, various embodiments of the disclosure described above can be performed through an embedded server provided in the robot or a server outside the robot.

Meanwhile, according to an embodiment of the disclosure, various embodiments described above may be implemented by software including instructions stored in a machine-readable storage medium (for example, a computer-readable storage medium). A machine may be an apparatus that invokes the stored instruction from the storage medium and may be operated depending on the invoked instruction, and may include the display apparatus (for example, the display apparatus A) according to the disclosed embodiments. In the case where a command is executed by the processor, the processor may directly perform a function corresponding to the command or other components may perform the function corresponding to the command under a control of the processor. The command may include codes created or executed by a compiler or an interpreter. The machine-readable storage medium may be provided in a form of a non-transitory storage medium. Here, the term "non-transitory" means that the storage medium is tangible without including a signal, and does not distinguish whether data are semi-permanently or temporarily stored in the storage medium.

In addition, according to an embodiment, the above-described methods according to the diverse embodiments may be included and provided in a computer program product. The computer program product may be traded as a product between a seller and a purchaser. The computer program product may be distributed in a form of a storage medium (for example, a compact disc read only memory (CD-ROM)) that may be read by the machine or online through an application store (for example, PlayStoreTM). In case of the online distribution, at least a portion of the computer program product may be at least temporarily stored in a storage medium such as a memory of a server of a manufacturer, a server of an application store, or a relay server or be temporarily generated.

In addition, each of components (for example, modules or programs) according to various embodiments described above may include a single entity or a plurality of entities, and some of the corresponding sub-components described above may be omitted or other sub-components may be further included in the diverse embodiments. Alternatively or additionally, some components (e.g., modules or programs) may be integrated into one entity and perform the same or similar functions performed by each corresponding component prior to integration. Operations performed by the modules, the programs, or the other components according to the diverse embodiments may be executed in a sequential manner, a parallel manner, an iterative manner, or a heuristic manner, at least some of the operations may be performed in a different order or be omitted, or other operations may be added.

Although exemplary embodiments of the disclosure have been illustrated and described hereinabove, the disclosure is not limited to the abovementioned specific exemplary embodiments, but may be variously modified by those skilled in the art to which the disclosure pertains without departing from the gist of the disclosure as disclosed in the accompanying claims. These modifications should also be understood to fall within the scope and spirit of the disclosure.

## Claims

1. A robot comprising:
a memory storing map information;
at least one sensor;
a driver configured to move the robot in a traveling route to a destination based on the map information,
the travelling route comprising a first area, which is a stopover location in the traveling route; and
a processor configured to:
identify a plurality of second areas within the first area,
identify priority information corresponding to each of the plurality of second areas,
identify a location of one or more objects within the first area based on sensing data acquired through the at least one sensor,
update the priority information corresponding to each of the plurality of second areas based on at least one of the identified location of the one or more objects or a predicted departure time to a next stopover location within the traveling route, and
control the driver to move the robot based on the updated priority information.

2. The robot of claim 1, wherein the processor configured to identify the predicted departure time from the first area to the next stopover location within the traveling route while the robot enters the specific space or while the robot is located in one of the plurality of second areas,
identify a remaining traveling time within the first area based on the predicted time,
based on an identification that the remaining traveling time is less than a threshold time, update the priority information based on locations of each of the plurality of second areas, and
control the driver to move the robot based on the updated priority information.

3. The robot of claim 2, further comprising:
a user interface,
wherein the processor is further configured to:
update the priority information corresponding to the plurality of second areas based on preference information corresponding to each of the plurality of second areas received through the user interface, and
control the driver to move the robot based on the updated priority information.

4. The robot of claim 2, further comprising:
an output unit,
wherein the processor is further configured to:
identify one of the second areas as a candidate area based on the priority information, and
control the output unit to output a notification indicating that the robot is scheduled to move to the candidate area.

5. The robot of claim 1, wherein the processor is further configured to:
identify a candidate area, among the plurality of second areas, separated from the one or more objects by a threshold distance or more based on at least one of a number of the second areas or positions of the second areas where the one or more objects is located within the first area while the robot enters the first area or while the robot is located in one of the plurality of second areas, and
control the driver to move to the identified subspace.

6. The robot of claim 1, wherein the processor is further configured to:
identify a number of second areas where the one or more objects is located among the plurality of second areas based on the location of the one or more objects within the first area,
control the driver to enter the first area when the number of identified second areas is less than a threshold number, and
update the traveling route to avoiding the first area when the number of identified second areas is greater than or equal to the threshold number.

7. The robot of claim 1, wherein the processor is further configured to:
identify weight values corresponding to the priority information corresponding to each of the plurality of second areas,
map the identified weight values to each grid corresponding to the plurality of second areas to acquire area of interest (AOI) information or map the identified weight values to each node corresponding to the plurality of second areas to acquire the AOI information, and
update one or more weight values included in the AOI information based on at least one of the identified location of the one or more objects or the predicted departure time to the next stopover location within the traveling route.

8. The robot of claim 7, wherein, when the weight value included in the AOI information is updated based on at least one of the identified location of the one or more objects or the predicted departure time to the next stopover location in the traveling route, the processor is further configured to:
identify whether an area, among the second areas, has an updated weight value, one or more weight values, greater than or equal to the threshold value, and
update the priority information corresponding to each of the plurality of second areas based on the updated weight value.

9. The robot of claim 1, wherein the first area is a movable closed space, and
wherein the processor is further configured to:
identify whether each of the plurality of second areas is a free space or an occupied space based on the one or more objects entering and exiting the first area, and
update the priority information corresponding to each of the plurality of second areas based on whether each of the plurality of second areas is the free space or the occupied space.

10. A method of controlling a robot, the method comprising:
identifying a plurality of second areas within a first area, which is a stopover location on a traveling route identified based on map information;
identifying priority information corresponding to each of the plurality of second areas;
identifying a location of one or more objects within the first area based on sensing data acquired through at least one sensor;
updating the priority information corresponding to each of the plurality of second areas based on at least one of the identified location of the one or more objects or a predicted departure time to a next stopover location within the traveling route; and
controlling a driver to move the robot based on the updated priority information.

11. The method of claim 10, wherein the updating of the priorities further comprises:
identifying the predicted departure time from the first area to the next stopover location within the traveling route while the robot enters the first area or while the robot and is located in one of the plurality of second areas,
identifying a remaining traveling time within the first area based on the predicted time,
when it is identified that the remaining traveling time is less than a threshold time, updating the priority information based on locations of each of the plurality of second areas.

12. The method of claim 11, wherein the updating of the priority information comprises updating the priority information corresponding to the plurality of second areas based on preference information corresponding to each of the plurality of second areas received through the user interface.

13. The method of claim 11, further comprising:
identifying one of the second areas as a candidate area based on the priority information, and
controlling an output unit to output a notification indicating that the robot is scheduled to move to the candidate area.

14. The method of claim 10, wherein the controlling of the driver further comprises:
identifying a candidate area, among the plurality of second areas, separated from the one or more objects by a threshold distance or more based on at least one of a number of the second areas or
positions of the second areas where the one or more objects is located within the first area while the robot enters the first area or while the robot is located in one of the plurality of second areas, and
controlling the driver to move to the identified candidate area.

15. A non-transitory computer-readable recording medium storing computer instructions that allow a robot to perform an operation when executed by a processor, wherein the operation comprises:
identifying a plurality of second areas within a first area, which is a stopover location on a traveling route identified based on map information;
identifying priority information corresponding to each of the plurality of second areas;
identifying a location of one or more objects within the first area based on sensing data acquired through at least one sensor;
updating the priority information corresponding to each of the plurality of second areas based on at least one of the identified location of the one or more objects or a predicted departure time to a next stopover location within the traveling route; and
controlling a driver to move the robot based on the updated priority information.
